# EUROPÄISCHE PATENTSCHRIFT

(11) **EP 0 428 770 B1**
(45) Veröffentlichungstag und Bekanntmachung des Hinweises auf die Patenterteilung: **01.02.1995**
(21) Anmeldenummer: 89121506.3
(22) Anmeldetag: 21.11.1989
(51) Int. Cl.: G06F 15/80

(54) **Datengesteuerter Arrayprozessor**
Data controlled array processor
Processeur en réseau commandé par données

(43) Veröffentlichungstag der Anmeldung: 29.05.1991
(73) Patentinhaber: Deutsche ITT Industries GmbH, 79108 Freiburg (DE)
(72) Erfinder: Schmidt, Ulrich, Dr. Ing., D-7800 Freiburg i.Br. (DE); Caesar, Knut, Dipl.-Ing., D-7803 Gundelfingen (DE)

(56) Entgegenhaltungen:
- PROCEEDINGS OF THE IEEE INTERNATIONAL CONFERENCE ON COMPUTER DESIGN: VLSI INCOMPUTERS, Port Chester, New York, 7.-10. Oktober 1985, Seiten 612-616, IEEE,New York, US; J.D. HARRIS et al.: "An interconnection scheme for a tightlycoupled massively parallel computer network"
- COMPUTER, Band 20, Nr. 7, Juli 1987, Seiten 102-103; I. KOREN: "The concept andimplementation of data-driven processor arrays"
- PROCEEDINGS OF THE INTERNATIONAL CONFERENCE ON SYSTOLIC ARRAYS, San Diego, CA,
- 25.-27. Mai 1988, Seiten 611-620, IEEE, New York, US; H. UEDA et al.: "Amultiprocessor system utilizing enhanced DSP's for image processing"
- ICASSP'86, PROCEEDINGS OF THE INTERNATIONAL CONFERENCE ON ACOUSTICS, SPEECH,AND SIGNAL PROCESSING, Tokyo, 7.-11. April 1986, Band 4, Seiten 2891-2894,IEEE, New York, US; D.A. SCHWARTZ et al.: "The optimal synchronous cyclo-staticarray: a multiprocessor supercomputer for digital signal processing"
- IEEE TRANSACTIONS ON COMPUTERS, Band C-34, Nr. 8, August 1985, Seiten 734-740,IEEE, New York, US; A.L. FISHER et al.: "Synchronizing large VLSI processor arrays"

## Beschreibung

Bei der digitalen Signalverarbeitung, beispielsweise von ein- und mehrdimensionalen Videosignalen, treten immer stärker Arrayprozessoren in das Blickfeld. Die Architektur dieser Arrayprozessoren, die aus einer Vielzahl von Zellen, die über Datenbusse miteinander in Verbindung stehen, besteht, ermöglicht parallele Signalverarbeitung in Echtzeit. Derartige Arrayprozessoren werden soweit sie taktgesteuert arbeiten, als "systolische", und soweit sie datengesteuert arbeiten, als "Wellenfront"-Arrayprozessoren bezeichnet. Anwendungen für Arrayprozessoren finden sich zunehmend auch in der Unterhaltungselektronik, die immer stärker von der digitalen Signalverarbeitung Gebrauch macht. Als Beispiel sei hier das hochauflösende Fernsehen mit flimmerfreier Bildwiedergabe genannt. Für die flimmerfreie Bildwiedergabe im Fernsehempfänger sind beispielsweise aus räumlich und zeitlich benachbarten Bildzeilen zusätzliche Zwischenzeilen zu interpolieren. Der räumliche Bezug ist durch die rasterabgetastete Bildebene und der zeitliche Bezug durch die Bildfolge definiert.

In "Computer", Bd.20, Nr.7, Juli 1987, Seiten 18 bis 33 ist beispielsweise ein derartiger Wellenfront-Arrayprozessor beschrieben (Titel: "Wavefront Array Processors-Concept to Implementation"). Nach dem SIMD-Prinzip (= Single-Instruction, Multiple-Data) kommuniziert jede einzelne Zelle mit ihrer unmittelbar benachbarten Zelle in Nord-, Ost-, Süd- und Westrichtung. Die Datenübergabe von Zelle zu Zelle erfolgt über ein "Handshake-Protokoll", welches die Datenübernahme der einzelnen Zellen unabhängig von ihrer jeweiligen relativen Taktphase macht. Da nicht alle Rechenabläufe der einzelnen Zellen gleichschnell ablaufen, werden die Datenquellen und die Datensenken durch FIFO-Speichereinrichtungen (= First-In-First-Out) zeitlich gepuffert. Für jede Datenrichtung ist hierzu eine FIFO-Speichereinrichtung im Datenpfad zweier benachbarter Zellen vorgesehen. Die Abwicklung des "Handshake-Protokolls" erfolgt in der Regel in einem Arbeitstakt.

In "Computer", B.20, Nr.7, Juli 1987, Seiten 102 bis 103 ist ein datengesteuerter Arrayprozessor beschrieben (Titel: " The Concept and Implementation of Data-Driven Processor Arrays"), der als VLSI-Schaltung (= Very Large Scale Integration) monolithisch integriert ist und dessen Zellen jeweils mit sechs benachbarten Zellen über ein internes Ringbussystem Daten austauschen können. Mehrere globale Busse innerhalb des Arrayprozessors gewährleisten, daß jede Zelle mit einem externen Rechner direkt kommunizieren kann.

In "IEEE Transactions on Computers", Bd. C-36, Nr.12, Dezember 1987, Seiten 1523 bis 1538 ist ein Arrayprozessor beschrieben (Titel: "The Warp Computer: Architecture, Implementation, and Performance", dessen Zellen auf Steckkarten aufgebaute Prozessormodule sind, die als eindimensionales systolisches Array zuammengeschaltet werden können. Hierbei ist jedes einzelne Prozessormodul nach dem MIMD-Prinzip getrennt programmierbar (MIMD = Multiple-Instructions, Multiple-Data), so daß die Anlage eine große Flexibilität für verschiedenste Aufgaben aufweist. Die Kommunikation zwischen den einzelnen Modulen erfolgt über Warteschlangen-Speicher, wobei bei vollem bzw. leerem Warteschlangen-Speicher (= FIFO) das sendende bzw. empfangende Modul so lange blockiert wird, bis der Datenverkehr über den Warteschlangen-Speicher wieder abgewickelt werden kann, weil dort freie Plätze für neue Daten entstanden bzw. neue Daten verfügbar sind. Dies ermöglicht eine äußerst flexible Programmierung des gesamten Prozessors, weil die Ablaufsteuerung nicht mehr auf die exakte zeitliche Synchronisierung der verschiedenen Zellprogramme achten muß.

Ein anderer MIMD-Arrayprozessor, der auf einem Chip drei monolithisch integrierte Zellen aufweist, die untereinander und über die Chipgrenzen hinweg in bidirektionaler Richtung Daten austauschen, ist im Tagungsband: Proceedings of the IEEE International Conference on Acoustics, Speech and Signal Processing, 1989, Seiten 2476 bis 2479 mit dem Titel: "A programmable video signal processor" beschrieben. Es handelt sich hierbei um einen Arrayprozessor, mit Dreieckstopologie und taktsynchroner Interzellkommunikation, der Videosignale in Echtzeit verarbeitet. Die Zellen weisen jeweils mehrere parallel arbeitende Verarbeitungs- und Speicherelemente auf, die untereinander durch einen Kreuzschienenverteiler verkoppelt sind. Jedes dieser Elemente wird durch ein "zyklo-statisches" Programm gesteuert (zyklisch durchlaufenes Programm ohne Verzweigungsmöglichkeit). Alle Abläufe sind synchron zum Prozessortakt, dessen Frequenz ein Vielfaches der Abtastfrequenz ist.

Aus der Europäischen Patentanmeldung EP-A 0 277 262 ist ein Arrayprozessor mit einer Vielzahl gleicher, mit dem selben Takt gesteuerter Zellen bekannt. Sie befinden sich an den Knotenpunkten eines gedachten zweidimensionalen Gitters und tauschen mit benachbarten Zellen in West-, Ost-, Süd- und Nordrichtung über vier Verbindungsbusse in bidirektionaler Richtung Daten aus. Der Datenaustausch erfolgt asynchron von Zelle zu Zelle. Jede Zelle enthält eine Speichereinrichtung für Daten, eine Arithmetik/Logikeinheit (= ALU) und ein Schieberegister, vgl. den Oberbegriff des Anspruchs 1.

Es ist Aufgabe der in den Ansprüchen gekennzeichneten Erfindung, einen monolithisch integrierbaren Arrayprozessor anzugeben, der die Echtzeitverarbeitung digitaler Signale unterschiedlicher Quellen ermöglicht, der mittels eines extern zugeführten Steuerprogramms (= Software) für eine Vielzahl unterschiedlicher Signalverarbeitungsaufgaben einsetzbar ist und der insbesondere für die Verarbeitung von Videosignalen in der Unterhaltungselektronik geeignet ist.

Die Erfindung und weitere Vorteile werden anhand der Figuren der Zeichnung näher erläutert:
Fig.1 zeigt schematisch als Blockschaltbild ein Ausführungsbeispiel eines Arrayprozessors nach der Erfindung mit 16 quadratisch angeordneten Zellen,
Fig.2 zeigt schematisch als Blockschaltbild eine Zelle des Arrayprozessors,
Fig.3 zeigt schematisch als Blockschaltbild ein Teil einer Zweiwege-Datenübergabe-Einrichtung mit Blockiereinrichtungen,
Fig.4 zeigt hierzu einige Zeitdiagramme,
Fig.5 zeigt schematisch als Blockschaltbild einen akkumulierenden Multiplizierer (= MAC),
Fig.6 zeigt schematisch als Blockschaltbild eine Arithmetik/Logikeinheit (= ALU),
Fig.7 zeigt schematisch das Format eines als Programmschritt einzugebenden Befehlsatzes und
Fig.8a und Fig.8b zeigen die Durchschaltung von überbreiten Datenströmen bei linear oder planar zusammengeschalteten Arrayprozessoren.

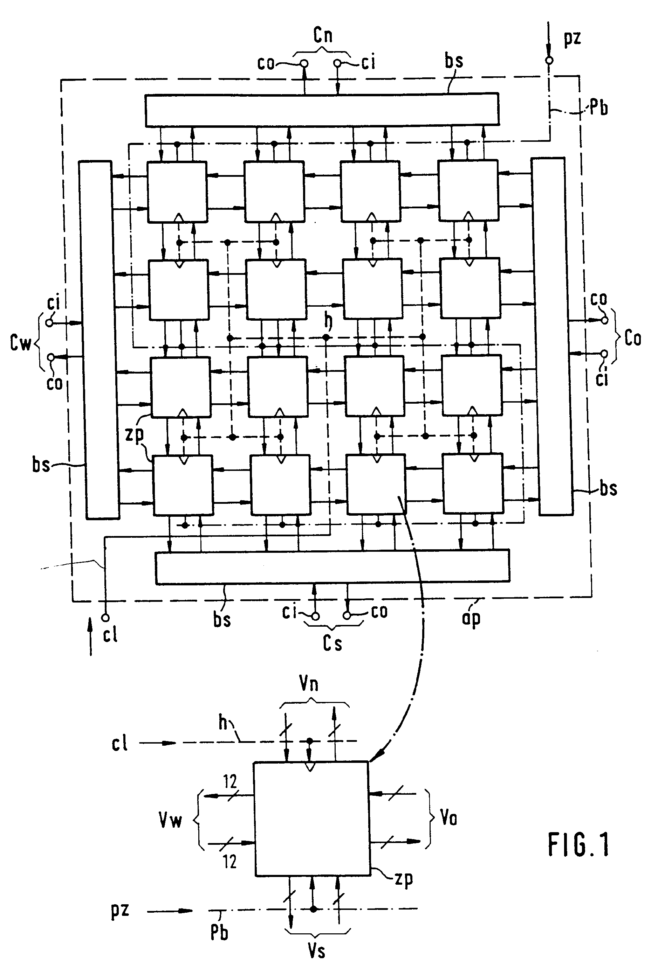

Der in Fig.1 schematisch als Blockschaltbild dargestellte Arrayprozessor ap enthält ein rechteckiges Prozessorfeld aus sechzehn einzelnen Zellen zp. Jede dieser Zellen weist in West-, Süd-, Ost- und Nordrichtung jeweils einen Verbindungsbus Vw, Vs, Vo, Vn auf, der entweder auf die jeweils benachbarte Zelle zp oder im Falle der außenliegenden Zellen auf einen von vier Busschaltern bs geführt ist. Jeder Busschalter bs faßt somit vier Verbindungsbusse der außenliegenden Zellen zusammen. Dabei wirkt der Busschalter als elektronischer Mehrebenen-Vielfachumschalter. In jeder Schaltposition werden sämtliche Dateneingangs- und Datenausgangsstellen des anzuschließenden Verbindungsbusses mit einer gleichgroßen Stellenzahl von externen Ein- und Ausgangsklemmen ci, co verbunden, die zusammen einen externen Arrayanschluß bilden. Zusätzlich werden über die Busschalter bs auch die jedem Verbindungsbus zugeordneten Statussignale, die der Datenübergabe dienen, geführt. Da alle vier Seiten des Arrayprozessors ap einen derartigen Busschalter enthalten, ergeben sich somit auch vier externe Arrayanschlüsse, nämlich der Arrayanschluß-West, -Süd, -Ost, und -Nord Cw, Cs, Co, Cn.

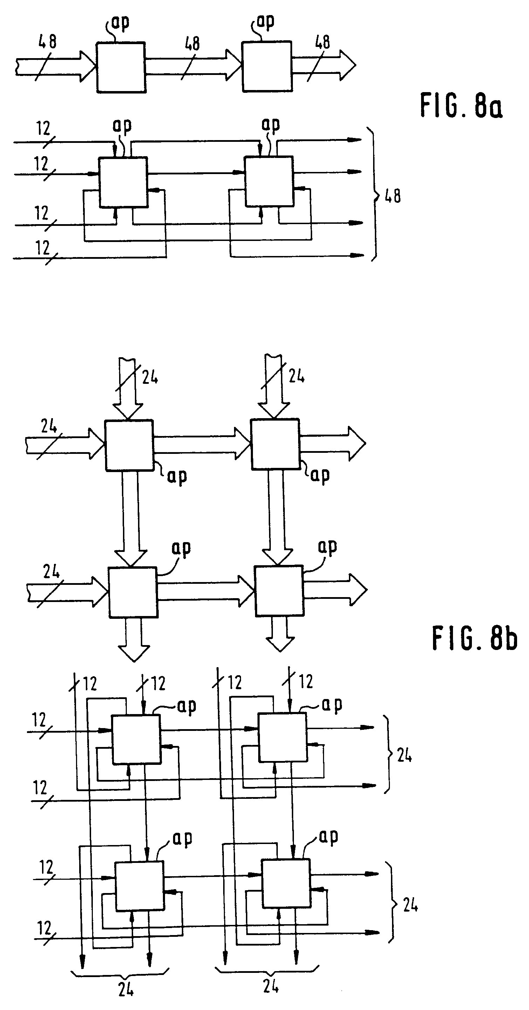

Weist beispielsweise jeder Verbindungsbus zwölf Stellen für die Dateneingabe und zwölf Stellen für die Datenausgabe auf, dann enthält auch jeder Arrayanschluß zwölf externe Ausgangsklemmen co für die Datenausgabe und zwölf externe Eingangsklemmen ci für die Dateneingabe. Der Datentransfer innerhalb und außerhalb des Arrayprozessors ap erfolgt streng parallel, wodurch beliebig viele Arrayprozessoren ihrerseits zu einem Großfeld mit streng paralleler Datenweitergabe zusammengeschaltet werden können. Damit lassen sich auch sehr komplizierte Aufgaben lösen, beispielsweise aus dem Fernseh-, Bildverarbeitungs-, Graphik-, oder mehrdimensionalen Filterbereich. Durch vorteilhaft gestalteten Datentransfer innerhalb der einzelnen Arrayprozessoren lassen sich bei ihrer linearen Hintereinanderschaltung ein linearer Datentransfer von bis zu achtundvierzig Stellen in linearer Richtung, vgl. Fig.8a, und bei ihrer planaren Hintereinanderschaltung von bis zu vierundzwanzig Stellen in zwei unabhängigen Richtungen (vgl. Fig.8b) erreichen - dies gilt für das angenommene Beispiel, bei dem der Verbindungsbus zwölf Ein- und zwölf Ausgangsstellen aufweist. Damit wird dem Anwender eine äußerst leistungsfähige Datentransfereinrichtung zur Verfügung gestellt. Die obere Figur zeigt dabei jeweils den logischen Datenpfad an, während die untere Figur jeweils die zugehörige physikalische Zusammenschaltung der externen Arrayein- und Arrayausgangsanschlüsse darstellt.

Die Signalverarbeitung des Arrayprozessors ap im Echtzeitbetrieb erfordert eine hohe Taktfrequenz, insbesondere bei der Verarbeitung hochauflösender Videosignale (High Definition Television = HDTV). Damit ein Taktsignal von beispielsweise 125 MHz gleichzeitig auf dem Chip verteilt werden kann, ist eine sorgfältige Verlegung der Taktleitungen erforderlich. Andernfalls wird die Phasenverschiebung zwischen den Taktsignalen der einzelnen Zellen zp zu groß. Eine zweckmäßige Verteilung für den Takt cl stellt der sogenannte "H-Baum" h dar, der gewährleistet, daß die verzweigten Taktleitungen bis in ihre Endpunkte gleichmäßig belastet sind und daß für jede Zelle auch die gleiche Länge der Taktzuführung sichergestellt ist. Eine derartige Anordnung ist beispielsweise in "IEEE Transactions on Computers", Bd. C-34, Nr.8, August 1985, Seiten 734 bis 740, insbesondere Seite 737 in dem Aufsatz: "Synchronizing Large VLSI Processor Arrays" beschrieben. In der Fig.1 nach der Erfindung ist der H-Baum h als gestrichelte Linie zwischen den einzelnen Zellen zp schematisch dargestellt.

Ferner ist in Fig.1 der Programmierbus Pb, an dem sämtliche Zellen zp angeschlossen sind, schematisch als strichpunktierte Linie dargestellt. Von außen wird das Zellenprogramm pz zugeführt, das über einzelne Adressen individuell jede Zelle zp erreicht. Da in der Regel bei einem Anwendungsprogramm das Zellenprogramm pz konstant bleibt oder nur selten geändert wird, reicht ein serieller Programmierbus Pb für die Programmierung voll aus.

Abweichend von Fig.1 können die einzelnen Zellen zp auch in beliebiger Rechteckform bis hin zu einer eindimensionalen, also linearen Form angeordnet sein. Auch die Anzahl der Zellen zp ist lediglich durch die Integrationstechnik begrenzt.

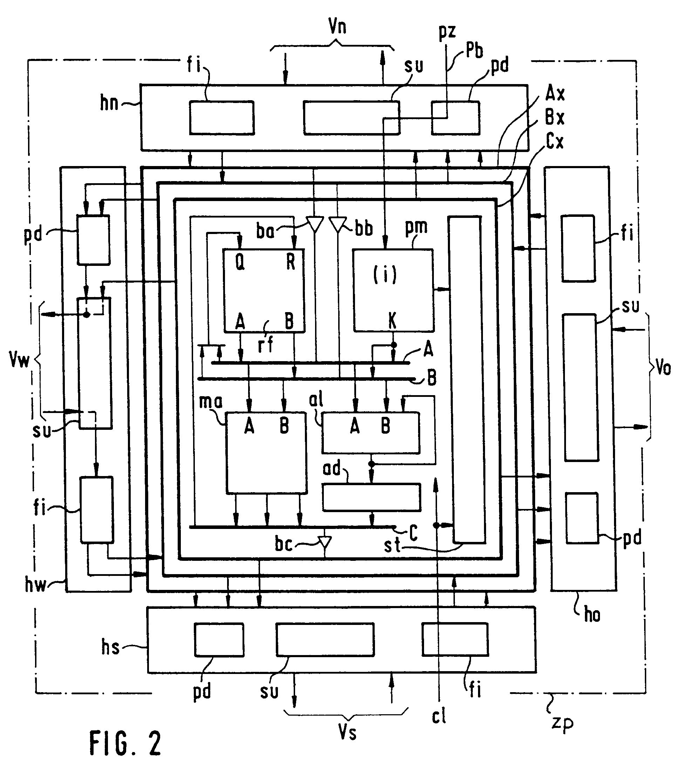

In Fig.2 ist schematisch als Blockschaltbild eine Zelle zp dargestellt. An den vier äußeren Seiten befindet sich jeweils eine Zweiwege-Datenübergabe-Einrichtung (= Handshake-Port), nämlich der Handshake-Port-West, - Süd, -Ost und -Nord hw, hs, ho, hn. Jeder Handshake-Port steuert die Datenübergabe über den zugehörigen Verbindungsbus, nämlich den Verbindungsbus-West, -Süd, -Ost und -Nord Vw, Vs, Vo, Vn. Parallel zu den Verbindungsbussen liegen in Fig.2 nicht dargestellte Steuerleitungen, über die die beiden Handshake-Ports Steuersignale für die Datenübergabe austauschen, was auch wie oben angegeben als "Handshake-Protokoll" bezeichnet wird.

Der eigentliche Signalverarbeitungsteil jeder Zelle zp, nämlich sein Zellkern, ist durch ein Ringbussystem umgeben, das ihn mindestens teilweise als Ring umgreift. Das Ringbussystem besteht aus einem Ax und einem Bx-Quellenbus Ax, Bx sowie einem Cx-Ergebnisbus Cx, wobei jeder Bus beispielsweise zwölfstellig ausgeführt ist. Jeder Handshake-Port weist für den Ax-, Bx- und Cx-Ringbus einen zwölfstelligen Dateneingang und für den Ax- und den Bx-Ringbus einen zwölfstelligen Datenausgang auf. Dabei werden die Datenausgänge aus einem "First-In-First-Out"-Speicher (= FIFO) innerhalb des Handshake-Ports gespeist. Der Ax- und Bx-Dateneingang des Handshake-Ports ist auf eine Port-Verzögerungseinrichtung pd geführt, die die Signale um eine bestimmte Zeit verzögert. Wie später noch gezeigt wird, ergibt sich die Verzögerung aus der Forderung, daß Daten, die über das Ringbussystem geführt werden, nicht eher an einem Handshake-Port erscheinen als Daten, die zunächst durch den Zellkern geführt werden. Damit wird die Gleichzeitigkeit der extern zugänglichen Daten erreicht, die unabhängig von der jeweiligen Verarbeitung im Zellkern ist. Daten, die aus dem Zellkern stammen, werden zunächst auf den Cx-Ergebnisbus Cx geführt und gelangen von dort auf einen Handshake-Port. Da diese Daten nicht mehr verzögert werden müssen, gelangen sie direkt auf das Schaltwerk su im Handshake-Port. Das Schaltwerk su gibt unter Abwicklung des Handshake-Protokolls entweder die verzögerten Daten des Ax- oder des Bx-Quellenbusses oder die unverzögerten Daten des Cx-Ergebnisbusses über den Verbindungsbus an die Nachbarzelle ab. Die zu empfangenden Daten werden dem Schaltwerk su ebenfalls unter Abwicklung eines Handshake-Protokolls über den zugehörigen Verbindungsbus zugeführt und werden zur zeitlichen Pufferung in das FIFO fi geladen. Von dort gelangen sie wie bereits beschrieben entweder auf den Ax- oder Bx-Quellenbus.

Die Abwicklung dieser und weiterer Steuervorgänge erfolgt durch eine Steuereinrichtung st in der Zelle zp, und zwar in Abhängigkeit von den in einem Programmspeicher pm abgespeicherten Befehlssätzen i. Der besseren Übersichtlichkeit wegen sind in Fig.2 lediglich die in der Regel aus mehrstelligen Busleitungen bestehenden Datenverbindungen dargestellt, während die Steuerleitungen nicht wiedergegeben sind. Da alle Handshake-Ports gleich sind, sind die internen Datenpfade lediglich im Handshake-Port-West hw ausführlich dargestellt.

Das Ringbussystem ermöglicht einen sehr flexiblen Datenaustausch zwischen verschiedenen Handshake-Ports einer Zelle. Es können beispielsweise über die drei Ringbusse Ax, Bx, Cx drei unabhängige Datenströme geführt werden, wobei die Quellbusse Ax, Bx durch jeweils genau einen Port gespeist werden, während der Ergebnisbus Cx bis zu vier Ports gleichzeitig speisen kann.

Außer dem Ringbussystem enthält die Zelle zp für die interne Datenverarbeitung ein Kernbussystem, das aus einem A- und einem B-Quellenbus A, B, sowie einem C-Ergebnisbus C besteht, wobei der A- bzw. B-Quellenbus A, B über ein A-, bzw. B-Busregister ba, bb aus dem Ax- bzw. Bx-Quellenbus Ax, Bx gespeist werden können. Entsprechend speist der C-Ergebnisbus C über ein C-Busregister bc den Cx-Ergebnisbus Cx. Diese Busregister entkoppeln das Kernbussystem vom Ringbussystem und ermöglichen zusätzlich, daß das Datenwort am Busregisterausgang so lange gespeichert wird, bis es von einem neuen Datenwort überschrieben wird. Die aus den Handshake-Ports ausgelesenen und in den Busregistern ba, bb zwischengespeicherten Datenworte sind für die Signalverarbeitungsschaltungen des Zellkerns so lange verwendbar, bis sie durch erneuten lesenden Zugriff auf einen Handshake-Port wieder überschrieben werden.

Die eigentliche Signalverarbeitung im Zellkern erfolgt durch einen akkumulierenden Multiplizierer (= MAC) ma, der eingangsseitig an den A- und den B-Quellenbus A, B und ausgangsseitig an den C-Ergebnisbus C angeschlossen ist, sowie durch eine Arithmetik/Logikeinheit (= ALU) al, die auch Schiebe- und Rotationsfunktionen ausführt, die eingangsseitig ebenfalls an den A- und den B-Quellenbus A, B und ausgangsseitig über eine ALU-Verzögerungsstufe ad an den C-Ergebnisbus C angeschlossen ist.

Die schnelle Zwischenspeicherung von Daten erfolgt in einem Registerblock rf, der beispielsweise sechzehn wahlweise zugängliche Registerzellen r0, ..., r15 aufweist. Des schnellen Zugriffs wegen kann dieser Registerblock gleichzeitig über einen A- und einen B-Ausgang gelesen und über einen Q- oder einen R-Eingang geschrieben werden. Damit ist der Registerblock rf an die Dreiadreßverarbeitung der Zelle angepaßt, die in jedem Takt cl zwei Operanden miteinander verknüpft und ein Ergebnis abspeichert. Der R-Eingang des Registerblocks rf wird nur von dem C-Ergebnisbus C gespeist, während der Q-Eingang entweder aus dem A- oder dem B-Quellenbus A, B gespeist wird.

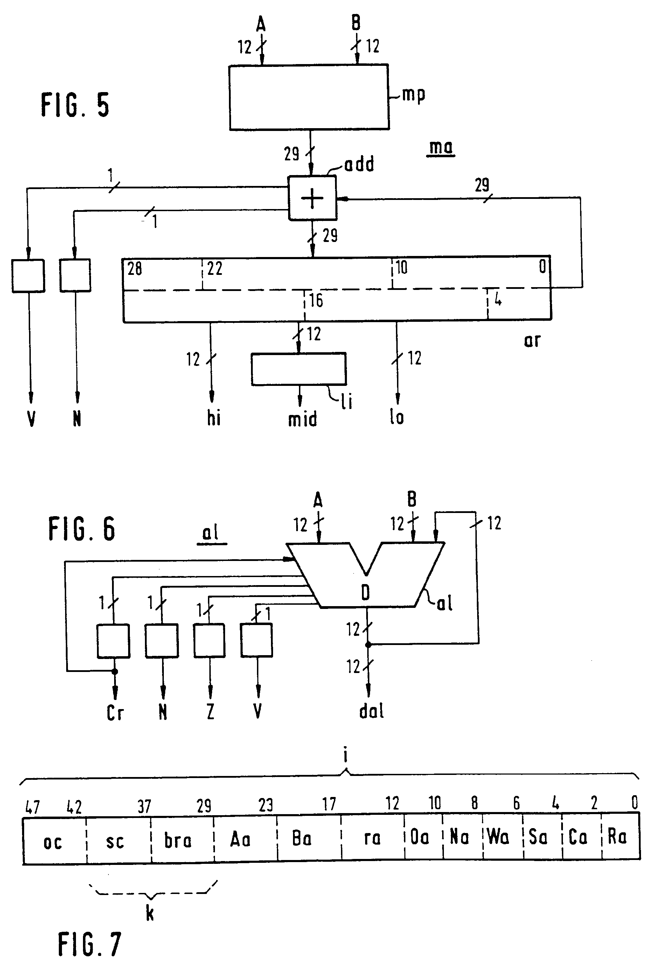

Da die Pipeline-Tiefe des MAC ma größer als die Pipeline-Tiefe der ALU al ist, wird durch die Verzögerungszeit der ALU-Verzögerungsstufe ad der Zeitausgleich bewirkt. Für Operationen, die das Ergebnis der vorhergehenden Operation als Eingangsoperation verwenden - man nennt dies auch "verkettete" Operationen -, wird der Ausgang D der ALU al direkt auf einen der ALU-Eingänge zurückgeführt. In Fig.7 ist es beispielsweise der B-Eingang der ALU al. Durch diesen direkten Rückführungspfad wird die Latenzzeit der ALU-Verzögerungsstufe ad minimiert.

Die im Programmspeicher pm enthaltenen Befehlsätze i können auch Konstanten k enthalten, die über den Konstantenausgang K entweder auf den A- oder B-Quellenbus A, B gegeben werden.

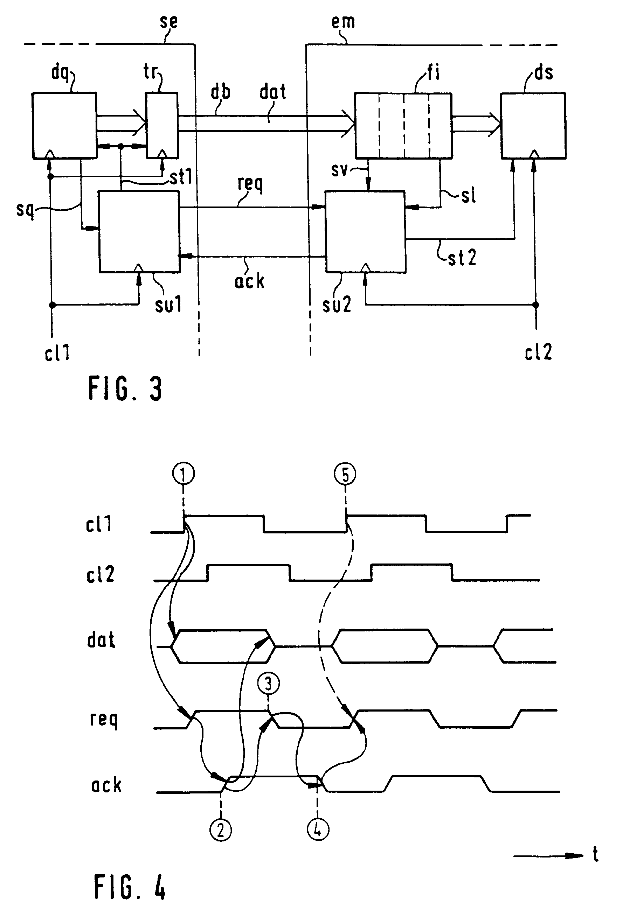

In Fig.3 ist schematisch als Blockschaltbild ein Teil einer Zweiwege-Datenübergabe-Einrichtung dargestellt, die wie angegeben auch als Handshake-Port bezeichnet wird. Der besseren Übersichtlichkeit wegen sind lediglich diejenigen Schaltungsteile wiedergegeben, die für den Datentransfer in einer Richtung erforderlich sind. Für den bidirektionalen Datenverkehr enthält jeder Handshake-Port den in Fig.3 dargestellten Datensender se und den Datenempfänger em. Das Tor tr ist dabei dem sendenden Schaltwerk su1 zuzurechnen. Es puffert das Datenwort dat, das über den Datenbus db auf den Datenempfänger em übertragen werden soll.

Dem empfangenden Handshake-Port im Datenempfänger em sind der FIFO-Speicher fi und das Senken-Schaltwerk su2 zuzurechnen. Im Datensender se ist eine von einem ersten Taktsignal cl1 getaktete Datenquelle dg angegeben, die beispielsweise eine der Datenquellen im Zellkern sein kann. Ihr entspricht im Datenempfänger em eine von einem zweiten Taktsignal cl2 gesteuerte Datensenke ds, die beispielsweise eine der Datensenken im Zellkern der empfangenden Zelle ist. Die beiden Takte cl1, cl2 sind zwar frequenzgleich, ihre Phasen können jedoch infolge von Laufzeitunterschieden voneinander abweichen, vgl. Fig.4.

Mittels des bereits erwähnten asynchronen Handshake-Protokolls wird erreicht, daß der Datentransfer sicher abgewickelt wird, auch wenn die beiden Takte unterschiedlich verzögert sind, oder gar in der Frequenz voneinander abweichen. Der Ablauf im einzelnen wird anhand der Zeitdiagramme von Fig.4 erläutert.

Wenn der Datensender se ein Datenwort dat abgeben will, dann meldet er zum Zeitpunkt 1 mittels eines Anforderungssignals (= Requestsignal) req dies dem Senken-Schaltwerk su2 an. Das Anforderungssignal kann jedoch nur dann gegeben werden, wenn ein dem Senken-Schaltwerk su2 entstammendes Quittungssignal (= Acknowledge-Signal) ack nicht gesetzt ist. - Ein nicht gesetztes Quittungssignal weist aus, daß der Datenempfänger em bereit ist, ein Datenwort zu empfangen. - Die erfolgte Übernahme des Datenwortes dat wird durch Setzen des zurückgeschickten Quittungssignals ack dem Quellen-Schaltwerk su1 zum Zeitpunkt 2 signalisiert. Das Signal wird dabei erst dann gesendet, wenn das Datenwort dat tatsächlich übernommen worden ist. Das Datensignal dat muß spätestens zum Beginn des Anforderungssignals req seinen stabilen Zustand erreicht haben.

Das Quellen-Schaltwerk su1 quittiert den Empfang des Quittungssignals ack durch die Rücksetzung des Anforderungssignals req zum Zeitpunkt 3. Dabei kann dann auch das Datenwort dat zurückgenommen werden. Die Bereitschaft des Senken-Schaltwerks su2, ein neues Datenwort dat zu übernehmen, wird dem Quellen-Schaltwerk su2 durch die Rücksetzung des Quittungssignals ack zum Zeitpunkt 4 signalisiert. Dies bedeutet, daß im FIFO-Speicher fi mindestens eine Speicherzelle frei ist. Zum Zeitpunkt 5 kann frühestens ein neuer Datentransfer eingeleitet werden. Der gesamte Datentransfer ist somit asynchron innerhalb einer einzigen Taktperiode abwickelbar.

Auslösung und Rücknahme des Anforderungs- und des Quittungssignals sind logisch mit Status-Signalen aus dem Datensender se und dem Datenempfänger em verknüpft. Beispielsweise kann das Anforderungssignal req nur dann ausgelöst werden, wenn ein Quellen-Statussignal sq signalisiert, daß die Datenquelle dq ein Datenwort dat erzeugt hat. Auf der Empfängerseite folgt dem Setzen des Anforderungssignals req das Setzen des Quittungssignals ack. Dieses wird nur dann zurückgenommen, wenn ein erstes Senken-Statussignal sv signalisiert, daß mindestens eine Zelle im FIFO-Speicher fi frei ist. Der Rücknahme des Quittungssignals folgt der Datensender se mit der Rücknahme des Anforderungssignals req. Ohne die Rücknahme des Quittungssignals kann das Quellen-Schaltwerk su1 kein neues Datenwort auslösen.

Damit der Datentransfer innerhalb einer Taktperiode abgeschlossen werden kann, müssen alle vier Phasen des Handshake-Protokolls innerhalb einer Taktperiode abgewickelt werden. Dies kann entweder asynchron erfolgen oder synchron zu einem eventuell vorhandenen höherfrequenten Takt. Durch die Verriegelung der einzelnen Phasen des Handshake-Protokolls wird aber in jedem Fall ein sicherer Datentransfer erreicht.

Es ist ersichtlich, daß ein großer FIFO-Speicher fi einen weithin unabhängigen Datenaustausch ermöglicht, wenn im Mittel der Datenempfänger em genauso viele Daten übernimmt wie der Datensender se erzeugt. Ist dies nicht mehr gewährleistet, dann gehen entweder in der Datenquelle dq Daten verloren oder die Datensenke ds liest leere Zellen des FIFO-Speichers fi aus. Dieser Zustand muß im Programm durch Einfügung von Stillhaltebefehlen (= nop-Befehlen) vermieden werden. Dies erfordert jedoch eine genaue Überwachung der Durchlaufzeiten der einzelnen Signalwege im Arrayprozessor und macht die Programmierung extrem schwierig.

Von großem Vorteil ist es daher, wenn die Schaltwerke su1, su2 automatisch sicher stellen, daß der Programmierer sich nicht um die logische Synchronisierung der einzelnen Datenwege kümmern muß. Das Anhalten der Datenquelle dq und des Tors tr ist beispielsweise durch ein Quellen-Stopsignal st1 aus dem Quellenschaltwerk su1, bewirkt, das dann ausgelöst wird, wenn das Quittungssignal ack signalisiert, daß der Datenempfänger em nicht aufnahmebereit ist. Andererseits wird die Datensenke ds im Datenempfänger em durch ein Senken-Stopsignal st2 aus dem Senken-Schaltwerk su2 blockiert, wenn ein zweites Statussignal sl aus dem FIFO-Speicher fi anzeigt, daß dort alle Zellen leergelaufen sind. Solange ein Stopsignal aktiv ist, bleibt der Zustand der betroffenen Zelle "eingefroren"; insbesondere bleiben die zeitlichen Beziehungen zwischen den Daten erhalten. Das Einfrieren des Zellzustandes erfordert einen erhöhten schaltungstechnischen Aufwand in der Zelle zp, der jedoch durch den erhöhten Programmierkomfort gerechtfertigt ist.

Durch die beschriebene Handshake-Steuerung wird erreicht, daß die Daten von Handshake-Port zu Handshake-Port asynchron übernommen werden können, wobei die zeitliche Abwicklung des Handshake-Protokolls im Detail sehr variabel gestaltet werden kann, um auch große Laufzeitunterschiede - z.B. über Chipgrenzen hinweg - zu berücksichtigen.

Der in Fig.5 schematisch dargestellte akkumulierende Multiplizierer (= MAC) besteht aus einem Parallelmultiplizierer mp, dessen A- und B-Eingänge beispielsweise jeweils zwölf Binärstellen aufweisen. Das vorzeichenerweiterte Ausgangssignal des Parallelmultiplizierers mp ist auf einen Eingang eines Addierers add geführt, dessen anderer Eingang mit dem Ausgangssignal eines Akku-Registers ar gespeist ist, dessen Eingang am Ausgang des Addierers add liegt. In Fig.5 hat das Akku-Register ar beispielsweise einen Speicherbereich von 29 Binärstellen. Die fünf zusätzlichen Stellen des Akku-Registers ar stellen den maximal möglichen Akkumulationsbereich für die Multiplikation zweier Zahlen mit jeweils 12 Binärstellen dar. Bei der Zweierkomplement-Zahlendarstellung enthalten sie zudem das Vorzeichenbit.

Der Addierer add liefert als zusätzliche Ausgangssignale ein Überlaufsignal V, das anzeigt wenn der vorgegebene Zahlenbereich überschritten wird und ein Vorzeichensignal N, das ein negatives Additionsergebnis anzeigt.

Der Inhalt des Akku-Registers ar kann auf drei verschiedene Weisen auf den C-Ergebnisbus C geschaltet werden. Wenn dieser beispielsweise lediglich eine Stellenbreite von zwölf Binärstellen aufweist, dann können selbstverständlich höchstens zwölf Stellen des Akku-Registers ar auf den C-Ergebnisbus C geschaltet werden. Eine Möglichkeit besteht darin, daß man den Registerinhalt nacheinander ausliest, und zwar zuerst die zwölf höchstwertigen Stellen als High-Bereich hi und dann die sich direkt daran anschließenden zwölf niederwertigeren Stellen als Low-Bereich lo. Die fünf niederstwertigen Stellen im Akku-Register bleiben dabei unberücksichtigt. Eine zweite Möglichkeit besteht darin, daß man zwölf Stellen aus einem Mittelbereich ausliest, der beispielsweise die Registerstellen 11 bis 22 umfaßt. Die Weiterverarbeitung dieses Mittelbereiches mid ist dann sinnvoll, wenn das Multiplikationsergebnis im wesentlichen innerhalb dieses Bereiches bleibt. Dies gilt auch für die Multiplikation mit Festkomma-Operanden im Wertebereich von -1 bis +1. Ein Überschreiten des Zahlenbereichs mid führt jedoch auch dann zu keinem störenden Ergebnissprung, wenn dieser Mittelbereich mid über einen evt. über das Programm aktivierbaren Begrenzer li geführt ist, der den Datenwert an der Bereichsober- bzw. Bereichsuntergrenze festhält.

In Fig.6 ist schematisch als Blockschaltbild eine Arithmetik/Logikeinheit (= ALU) al dargestellt, deren beiden Eingänge A, B beispielsweise mit jeweils zwölf Stellen an den A- bzw. B-Quellenbus A, B angeschlossen sind. Der Datenausgang D umfaßt ebenfalls zwölf Stellen, die das ALU-Ergebnis dal liefern und die auf einen zweiten ALU-Eingang zurückgeführt sind. Mit dieser Datenrückführung lassen sich verkettete Schiebe- und Rotationsfunktionen ausführen, die je nach Bedarf das Übertrag-Signal mit einschließen. Zusätzlich zu dem ALU-Ergebnis dal gibt die ALU al folgende Statussignale aus: bei Bereichsüberschreitung ein Überlaufsignal V, bei negativem Ergebnis ein Vorzeichensignal N, bei einem Null-Ergebnis ein Nullsignal Z und schließlich als weiteres Statussignal ein Übertragsignal Cr.

In Fig.7 ist schließlich schematisch das Format eines als Programmschritt einzugebenden Befehlsatzes i mit beispielsweise achtundvierzig Stellen Umfang dargestellt. Ein erster Bereich enthält als Operationscode oc die codierten Befehle für die Steuereinrichtung st. Ein zweiter Bereich enthält einen Bedingungscode sc, der Statussignale des Zellkerns und der Handshake-Ports adressiert. Ein dritter Bereich enthält eine Verzweigungsadresse bra, die in Abhängigkeit vom Statuscode sc und den aktuellen Statussignalen des Zellkerns bzw. seiner Handshake-Ports, die Sprungadresse der im Programmspeicher pm enthaltenen Programmfolge angibt. Statt des Bedingungscodes sc und der Verzweigungsadresse bra kann in diesen beiden mindestens zwölf Stellen umfaßenden Bereichen auch eine Konstante k abgelegt sein, die wie bereits beschrieben über den Konstantenausgang K auf den A- oder B-Quellenbus A, B geschaltet wird.

In einem vierten und einem fünften Bereich werden die A- bzw. B-Quellenadressen Aa, Ba für das Ringbussystem definiert, die um einen Takt verzögert auch für das Kernbussystem gelten. Als Datenquellen dienen hierzu beispielsweise einer der Handshake-Ports hw, ho, hs, hn, eine der Registerzellen ro, ..., r15, die ALU al, die Konstante k oder eines der Busregister ba, bb. Dieser Quellendefinition schließen sich fünf Bereiche an, die bestimmen, wohin Daten zu laden sind. Es handelt sich somit um die Angabe von Senkenadressen. Eine erste Senkenadresse ra gibt im sechsten Bereich an, welche der Registerzellen r0, ..., r15 vom C-Ergebnisbus C zu laden ist. Im siebten, achten, neunten und zehnten Bereich stehen als zweite Senkenadressen die jeweils anzusteuernden Handshake-Portadressen Oa, Na, Wa, Sa, die den Datentransfer zu Nachbarzellen angeben.

Jeder dieser Bereiche umfaßt zwei Binärstellen, um anzuzeigen, von welchem der drei Busse des Ringbussystems die Daten stammen oder ob der Port "stumm" bleiben, also überhaupt keine Daten senden soll, was einem nop-Befehl entspricht (= no operation).

Im elften Bereich ist schließlich eine C-Quelladresse Ca enthalten, die angibt, welche Zellkernschaltung auf den C-Ergebnisbus C zu schalten ist. Schließlich enthält der zwölfte Bereich eine Register-Eingangsadresse Ra, die bestimmt, ob die im sechsten Bereich adressierte Registerzelle r0, ..., r15 über den Q- oder den R-Eingang einzuschreiben ist.

## Patentansprüche

1. Arrayprozessor (ap) mit einer Vielzahl gleicher, mit dem selben Takt gesteuerter Zellen (zp), die sich an den Knotenpunkten eines gedachten, zweidimensionalen orthogonalen Gitters befinden und die mit benachbarten Zellprozessoren in West-, Ost-, Süd- und Nordrichtung über vier Verbindungsbusse asynchron Daten austauschen, wobei jeder Zellprozessor zur Datenverarbeitung mindestens eine Arithmetik/Logikeinheit (= ALU), eine Schiebeeinrichtung und eine Speichereinrichtung für Daten aufweist,
gekennzeichnet durch folgende Merkmale:
- alle Zellen (zp) des Arrayprozessors (ap) sind auf einem einzigen Chip monolithisch integriert,
- der Arrayprozessor (ap) ist ein "Multiple Instruction and Multiple Data" - Prozessor (= MIMD-Prozessor), bei dem jede der Zellen (zp) individuell programmierbar ist,
- jeder der vier Randbereiche des Arrayprozessors (ap) weist einen elektronischen Busschalter (bs) auf, der wahlweise einen der angrenzenden Verbindungsbusse (Vw, Vo, Vs, Vn) der unmittelbar benachbarten Zellprozessoren (zp) mit externen, dem jeweiligen Randbereich zugeordneten Ein- und Ausgangsklemmen (ci, co) verbindet und über den gleichzeitig mehrstellige Daten ein- und ausgebbar sind,
- alle Zellen (zp) auf dem Chip werden von einem gemeinsamen Takt (cl) gesteuert,
- jede Zelle (zp) enthält folgende Teilschaltungen:
-- ein Ringbussystem, das einen Ax- und einen Bx-Quellenbus (Ax, Bx) sowie einen Cx-Ergebnisbus (Cx) aufweist und das den Zellkern mindestens teilweise als Ring umgreift,
-- Zweiwege-Datenübergabe-Einrichtungen (= Handshake-Port) (hw, ho, hs, hn), die in jeder Taktperiode über beide Datenwege jeweils einen neuen Datentransfer ausführen können, die in West-, Ost-, Süd- und Nordrichtung das Ringbussystem an die vier Verbindungsbusse (Vw, Vo, Vs, Vn) anschließen, die "First-In-First-Out"-Speicher (= FIFO) (fi) für die zu übertragenden Daten enthalten und die Blockiereinrichtungen aufweisen, die bei leer- bzw. vollgelaufenem FIFO die Signalverarbeitung der empfangenden bzw. der sendenden Zelle unterbrechen, wobei der gesamte Zustand der Zelle während dieses Wartezustandes unverändert "eingefroren" wird,
-- ein Kernbussystem, das einen A- und einen B-Quellenbus (A, B) sowie einen C-Ergebnisbus (C) aufweist, wobei das Kernbussystem über A-, B- und C-Busregister (ba, bb, bc) mit dem Ringbussystem gekoppelt ist,
-- ein Registerblock (rf), dessen Ein- und Ausgänge mit dem Kernbussystem gekoppelt sind,
-- eine Arithmetik/Logikeinheit (= ALU) (al), die auch Schiebe- und Rotationsfunktionen ausführt und die eingangsseitig an den A- und B-Quellenbus (A, B) und ausgangsseitig über eine ALU-Verzögerungsstufe (ad) an den C-Ergebnisbus (C) angeschlossen ist,
-- ein akkumulierender Multiplizierer (= MAC) (ma), der eingangsseitig an den A- und den B-Quellenbus (A, B) und ausgangsseitig an den C-Ergebnisbus (C) angeschlossen ist,
-- ein Programmspeicher (pm), der über einen Programmierbus (Pb), an dem alle Zellen (zp) angeschlossen sind, geladen wird, und
-- eine Steuereinrichtung (st) zur Steuerung der Datenverarbeitung in der Zelle (zp), wobei der Steuereinrichtung die gespeicherten Daten des Programmspeichers (pm) und Statussignale aus den Teilschaltungen der Zelle (zp) zugeführt sind.

2. Arrayprozessor nach Anspruch 1, dadurch gekennzeichnet, daß die Verzögerungszeit der ALU-Verzögerungsstufe (ad) einschließlich der Signallaufzeit durch die ALU (al) gleich groß wie die Signaldurchlaufzeit durch den akkumulierenden Multiplizierer (ma) ist.

3. Arrayprozessor nach Anspruch 2, dadurch gekennzeichnet, daß innerhalb der Zelle zp die Verzögerungszeit des Signalpfades von einem Daten sendenden Handshake-Port (hw, ho, hs, hn) über das Ringbussystem zu einem anderen, Daten empfangenden Handshake-Port mittels einer in ihm enthaltenen Port-Verzögerungseinrichtung (pd) gleichgroß wie die Signaldurchlaufzeit von einem Handshake-Port durch den Zellkern zu einem anderen Handshake-Port ist.

4. Arrayprozessor nach Anspruch 1, dadurch gekennzeichnet, daß der akkumulierende Multiplizierer (= MAC) (ma) folgende Teilschaltungen enthält:
- ein Parallelmultiplizierer (mp) in Pipelinetechnik, dessen Ausgang über einen Addierer (add) auf ein Akku-Register (ar) geführt ist, mit dessen Inhalt ein anderer Eingang des Addierers (add) gespeist ist,
- der Addierer (add) liefert ferner ein Überlauf- und ein Vorzeichensignal (V, N),
- das im Akku-Register (ar) stehende Datenwort ist in drei sich teilweise überlappende Bereiche für die weitere Signalverarbeitung aufgespalten, die wahlweise auf den C-Ergebnisbus (C) zu schalten sind,
-- einen High-Bereich (hi), der die höchstwertigen Stellen umfaßt,
-- einen Low-Bereich (lo), der die sich anschließenden niederwertigen Stellen umfaßt und
-- einen Mittelbereich (mid), der einen durchgehenden Bereich mittlerer Stellen umfaßt, wobei dieser Mittelbereich (mid) optional durch einen Begrenzer (li) innerhalb fester Bereichsgrenzen begrenzbar ist.

5. Arrayprozessor nach Anspruch 1, dadurch gekennzeichnet,
- daß die ALU (al) ein Überlauf-, ein Vorzeichen-, ein Null- und ein Übertragsignal (V, N, Z, Cr) abgibt und
- daß für verkettete Funktionen der Datenausgang (D) der ALU (al) über einen Datenpfad auf einen ihrer beiden Eingangsanschlüsse direkt zurückgeführt ist.

6. Arrayprozessor nach Anspruch 1, dadurch gekennzeichnet,
- daß der Registerblock (rf) gleichzeitig über einen A- und einen B-Ausgang zu lesen und über einen Q- oder einen R-Eingang zu schreiben ist,
- daß der A- bzw. B-Ausgang mit dem A- bzw. B-Quellenbus verbunden ist,
- daß der Q-Eingang wahlweise vom A- oder vom B-Quellenbus gespeist wird und
- daß der R-Eingang vom C-Ergebnisbus (C) gespeist ist.

7. Arrayprozessor nach Anspruch 1, dadurch gekennzeichnet, daß der Programmspeicher (pm) in seinem Befehlsatz (i) auch Konstanten (k) enthält, die über einen Konstantenausgang (K) wahlweise auf den A- oder den B-Quellenbus (A, B) geschaltet werden können.

8. Arrayprozessor nach Anspruch 1, dadurch gekennzeichnet, daß im Programmspeicher (pm) Befehlsätze (i) enthalten sind, deren Format aus folgenden Teilen besteht:
- ein Operationscode (oc),
- ein Bedingungscode (sc), der als Sprungbedingung den Sollzustand der jeweiligen Statussignale enthält,
- eine Verzweigungsadresse (bra),
- eine A- und eine B-Quelladresse (Aa, Ba) für den A- bzw. Ax- und den B- bzw. Bx Quellenbus (A, Ax, B, Bx), wobei als Datenquelle einer der Handshake- Ports (hw, ho, hs, hn), eine der Registerzellen (ro, ..., r15), die ALU (al), die Konstante (k) oder eines der Busregister (ba, bb,) dient,
- eine erste Senkenadresse (ra), die hierzu eine der Registerzellen (ro, ..., r15) angibt,
- weitere Senkenadressen (Oa, Na, Wa, Sa), die den Datentransfer zu Nachbarzellen angeben,
- eine C-Quelladresse (Ca), die angibt, welche Zellkernschaltung auf den C-Ergebnisbus (C) zu schalten ist und
- eine Register-Eingangsadresse (Ra), die angibt, ob die einzuschreibende Registerzelle (ro, ..., r15) über den Q- oder den R-Eingang einzuschreiben ist.

9. Arrayprozessor nach Anspruch 8, dadurch gekennzeichnet, daß im Befehlsatz (i) anstatt des Bedingungscodes (sc) und der Verzweigungsadresse (bra) eine Konstante (k) enthalten ist.

10. Arrayprozessor nach Anspruch 1, dadurch gekennzeichnet, daß der Takt (cl) auf dem Chip topologisch als H-Baum (h) an die einzelnen Zellen (zp) geführt ist.

## Claims

1. Array processor (ap) having a plurality of identical cells (zp) which are driven with the same clock signal, are located at the nodes of an imaginary, two-dimensional orthogonal lattice, and exchange data asynchronously via four communication buses with adjacent cell processors to the west, east, south, and north, each cell processor including at least an arithmetic/logic unit (= ALU), a shifting device, and a data memory device for data-processing purposes,
characterized by the following features:
- All cells (zp) of the array processor (ap) are integrated on a single chip;
- the array processor (ap) is a multiple-instruction, multiple-data-stream processor (= MIMD processor), in which each of the cells (zp) is programmable individually;
- each of the four edge regions of the array processor (ap) comprises an electronic bus switch (bs) which selectively connects the associated communication bus (Vw, Vo, Vs, Vn) of one of the adjacent cell processors (zp) to external input and output terminals (ci, co) associated with the respective edge region, and via which multibit data can be fed in and out simultaneously;
- all cells (zp) on the chip are driven by a common clock signal (cl), and
- each cell (zp) contains the following subcircuits:
-- a ring-bus system consisting of an Ax-source bus (Ax), a Bx-source bus (Bx), and a Cx-result bus (Cx) and encircling the cell nucleus at least in part;
-- two-way data transfer devices (= handshake ports) (hw, ho, hs, hn) which can perform a new data transfer via both data paths in each clock period, connect the ring-bus system to the four communication buses at the west (Vw), east (Vo), south (Vs), and north (Vn), contain first-in-first-out memories (= FIFOs) (fi) for the data to be transmitted, and have blocking devices which, when the FIFO is empty or full, interrupt the signal processing of the receiving or transmitting cell, respectively, the state of the cell being "frozen" during this wait state;
-- a nucleus-bus system consisting of an A-source bus (A), a B-source bus (B), and a C-result bus (C) and coupled via A-, B-, and C-bus registers (ba, bb, bc) to the ring-bus system;
-- a register block (rf) having its inputs and outputs coupled to the nucleus-bus system;
-- an arithmetic/logic unit (= ALU) (al) which also performs shifting and rotation functions and is connected at the input end to the A- and B-source buses (A, B) and at the output end via an ALU delay stage (ad) to the C-result bus (C);
-- an accumulating multiplier (= MAC) (ma) which is connected at the input end to the A- and B-source buses (A, B) and at the output end to the C-result bus (C);
-- a program memory (pm) which is loaded via a programming bus (Pb) to which all cells (zp) are connected, and
-- a control unit (st) for controlling the data processing in the cell (zp), said control unit being fed with the stored data of the program memory (pm) and with status signals from the subcircuits of the cell (zp).

2. An array processor as claimed in claim 1, characterized in that the delay of the ALU delay stage (ad), including the propagation delay in the ALU (al),is equal to the propagation delay in the accumulating multiplier (ma).

3. An array processor as claimed in claim 2, characterized in that within the cell (zp), the delay of the signal path from a data-transmitting handshake port (hw, ho, hs, hn) via the ring-bus system to another, data-receiving handshake port is equal to the signal delay from one handshake port through the cell nucleus to another hand-shake port, and that this is achieved by means of a port-delay device (pd) included in said data-receiving hand-shake port.

4. An array processor as claimed in claim 1, characterized in that the accumulating multiplier (= MAC) (ma) contains the following subcircuits:
- a parallel multiplier (mp) using pipelining and having its output coupled through an adder (add) to an accumulator register (ar) the contents of which feed another input of the adder (add);
- the adder (add) further provides an overflow signal (V) and a sign signal (N), and
- the data word contained in the accumulator register (ar) is split into three overlapping ranges for further signal processing which are selectively connectable to the C-result bus (C), namely
-- a high range (hi) covering the most significant bits,
-- a low range (lo) covering the adjoining low-order bits, and
-- a middle range (mid) covering a through range of middle bits, said middle range (mid) being optionally limitable within fixed limits by a limiter (li).

5. An array processor as claimed in claim 1, characterized in:
- that the ALU (al) provides an overflow signal (V), a sign signal (N), a zero signal (Z), and a carry signal (Cr), and
- that for concatenated functions, the data output (D) of the ALU (al) is fed directly back to one of the two input terminals of the ALU (al) via a data path.

6. An array processor as claimed in claim 1, characterized in
- that the register block (rf) can be simultaneously read from via an A-output and a B-output and written into via a Q-input or an R-input,
- that the A- and B-outputs are connected to the A- and B-source buses, respectively,
- that the Q-input is fed from either the A- or B-source bus, and
- that the R-input is fed from the C-result bus (C).

7. An array processor as claimed in claim 1, characterized in that the instruction set (i) contained in the program memory (pm) includes constants (k) which can be placed on either the A- or B-source bus (A, B) via a constant output (K).

8. An array processor as claimed in claim 1, characterized in that the program memory (pm) contains instruction sets (i) whose format consists of the following parts:
- an operation code (oc),
- a condition code (sc) which contains as a branch condition the required state of the respective status signals,
- a branch address (bra),
- an A-source address (Aa) for the A- and Ax-source buses (A, Ax) and a B-source address for the B- and Bx-source buses (B, Bx), with one of the handshake ports (hw, ho, hs, hn), one of the register cells (ro, ..., R15), the ALU (al), the constant (k), or one of the bus registers (ba, bb) serving as a data source,
- a first sink address (ra) which designates one of the register cells (ro, ..., r15) for this purpose,
- additional sink addresses (Oa, Na, Wa, Sa) which determine the data transfer to adjacent cells,
- a C-source address (Ca) which designates the cell-nucleus circuit to be connected to the C-result bus (C), and
- a register input address (Ra) which determines whether the addressed register cell (ro, ..., r15) must be written into via the Q- or R-input.

9. An array processor as claimed in claim 8, characterized in that instead of the condition code (sc) and the branch address (bra), a constant (k) is contained in the instruction set (i).

10. An array processor as claimed in claim 1, characterized in that on the chip, the clock signal (cl) is routed to the individual cells (zp) topologically as a H tree (h).

## Revendications

1. Processeur en réseau (ap) comportant une multiplicité de cellules identiques (zp), commandées par la même cadence et qui sont situées au niveau des noeuds d'un réseau orthogonal bidimensionnel imaginaire et échangent des données d'une manière asynchrone, par l'intermédiaire de quatre bus de liaison, avec des processeurs de cellules voisins, dans les directions ouest, est, sud et nord, chaque processeur de cellule comportant, pour le traitement des données, au moins une unité arithmétique/logique (= ALU), un dispositif à décalage et un dispositif de mémoire pour les données,
caractérisé par les caractéristiques suivantes :
- toutes les cellules (zp) du processeur en réseau (ap) sont intégrées de façon monolithique sur une seule microplaquette,
- le processeur en réseau (ap) est un processeur "Instructions multiples et données multiples" (= processeur MIMD), dans lequel chacune des cellules (zp) est programmable individuellement,
- chacune des quatre zones marginales du processeur en réseau (ap) possède un commutateur électronique de bus (bs), qui relie au choix l'un des bus de liaison contigus (Vw, Vo, Vs, Vn) des processeurs en cellules (zp) directement voisins, à des bornes externes d'entrée et de sortie (ci, co), qui sont associées à la zone marginale respective, et au moyen duquel des données à plusieurs chiffres peuvent être simultanément introduites et extraites,
- toutes les cellules (zp) situées sur la microplaquette sont commandées par une cadence commune (c),
- chaque cellule (zp) contient les circuits partiels suivants :
-- un système de bus en anneau, qui comprend un bus de source Ax et un bus de source Bx (Ax,Bx) ainsi qu'un bus de résultat Cx (Cx) et qui enserre au moins partiellement sous la forme d'un anneau le noyau de la cellule,
-- des dispositifs de transfert de données à deux voies (= port d'établissement de liaison) (hw, ho, hs, hn), qui peuvent exécuter, pendant chaque période de la cadence, respectivement un nouveau transfert de données par l'intermédiaire de deux voies de transmission de données et qui raccordent le système de bus en anneau aux quatre bus de liaison (Vw, Vo, Vs, Vn), dans la direction de l'ouest, de l'est, du sud et du nord, et qui contiennent des mémoires "premier entré premier sorti" (= FIFO) (fi) pour les données à transmettre et qui possèdent des dispositifs de blocage qui, dans le cas où la mémoire FIFO est vide ou pleine, interrompent le traitement des signaux de la cellule réceptrice ou de la cellule émettrice, l'état d'ensemble de la cellule étant "gelé" sans modification pendant cet état d'attente,
- un système de bus central, qui comprend un bus source A et un bus source B (A,B) ainsi qu'un bus de résultat C (C), le système de bus central étant couplé au système de bus en anneau par l'intermédiaire de registres de bus A, B et C (Ba, Bb, Bc),
-- un bloc de registres (rf), dont les entrées et les sorties sont couplées au système de bus central,
-- une unité arithmétique/logique (= ALU) (al), qui exécute également des fonctions de translation et de rotation et qui est raccordée, côté entrée, aux bus de source A et B (A,B) et, côté sortie, par l'intermédiaire d'un étage de retardement ALU (ad) au bus de résultat C (C),
-- un multiplicateur accumulateur (=MAC) (ma), qui est raccordé, côté entrée, au bus de source A et au bus de source B (A,B) et, côté sortie, au bus de résultat C (C),
-- une mémoire de programme (pm), qui est chargée par l'intermédiaire d'un bus de programmation (Pb), auquel sont raccordées toutes les cellules (zp), et
-- un dispositif de commande (st) pour la commande du traitement des données dans la cellule (zp), les données mémorisées de la mémoire de programmes (pm) et les signaux d'état étant envoyés au dispositif de commande à partir des circuits partiels de la cellule (zp).

2. Processeur en réseau selon la revendication 1, caractérisé en ce que le retard produit dans l'étage de retardement ALU (ad), y compris le retard de propagation des signaux provoqué par l'unité ALU (a1), est égal à la durée de transfert des signaux dans le multiplicateur accumulateur (ma).

3. Processeur en réseau selon la revendication 2, caractérisé en ce qu'à l'intérieur de la cellule zp, le retard apparaissant dans la voie de transmission des signaux qui part d'un port d'établissement de liaison (hw, ho, hs, hn), qui émet des données, en passant par le système de bus en anneau pour aboutir à un autre port d'établissement de liaison recevant des données, d'un dispositif de retardement (pd) contenu dans ce port est égal au temps de propagation des signaux sur le trajet partant d'un port d'établissement de liaison pour aboutir à un autre port d'établissement de liaison en passant par le noyau de la cellule.

4. Processeur en réseau selon la revendication 1, caractérisé en ce que le multiplicateur accumulateur (= MAC) (ma) contient les circuits partiels suivants :
- un multiplicateur parallèle (mp) réalisé selon la technique pipeline et dont la sortie est reliée par l'intermédiaire d'un additionneur (add) d'un registre accumulateur (ar), dont le contenu alimente une autre entrée de l'additionneur (add),
- l'additionneur (add) délivre en outre un signal de dépassement de capacité et un signal de signe (V, N),
- le mot de données, qui est présent dans le registre accumulateur (ar), est divisé en trois zones, qui se chevauchent partiellement, pour le traitement ultérieur des signaux, qui doivent être commutés au choix sur le bus de résultat C (C),
-- une zone à niveau haut (hi), qui comprend les positions de poids maximum,
-- une zone à niveau bas (lo), qui comprend les positions suivantes à niveau bas, et
-- une zone centrale (mid), qui englobe une gamme continue de chiffres centraux, cette zone centrale (mid) pouvant être limitée facultativement par un limiteur (li) à l'intérieur de limites fixées de zone.

5. Processeur en réseau selon la revendication 1, caractérisé en ce que
- que l'unité ALU (1) délivre un signal de dépassement de capacité, un signal de signe, un signal de zéro et un signal de report (V,N,Z,Cr), et
- que pour des fonctions chaînées, la sortie de données (D) de l'unité ALU (Al) est raccordée directement par réaction au moyen d'une voie de transmission de données, à l'une de ses deux bornes d'entrée.

6. Processeur en réseau selon la revendication 1, caractérisé en ce
- que le bloc de registre (rf) doit être lu simultanément au moyen d'une sortie A et d'une sortie B et doit être enregistré par l'intermédiaire d'une entrée Q et d'une entrée R,
- que la sortie A ou B est reliée au bus de source A ou B,
- que l'entrée Q est alimentée au choix par le bus de source A ou par le bus de source B, et
- que l'entrée R est alimentée par le bus de résultat C (C).

7. Processeur en réseau selon la revendication 1, caractérisé en ce que la mémoire de programme (pm) contient, dans son ensemble d'instructions (i), également des constantes (k), qui peuvent être commutées au choix, par l'intermédiaire d'une sortie de constante (K), sur le bus de source A ou le bus de source B (A,B).

8. Processeur en réseau selon la revendication 1, caractérisé en ce que la mémoire de programme (pm) contient des ensembles d'instructions (i), dont le format est constitué par les éléments suivants :
- un code opération (oc),
- un code de condition (sc), qui contient, comme condition de saut, l'état de consigne des signaux d'état respectifs,
- une adresse de branchement (bra),
- une adresse de source A et une adresse de source B (Aa, Ba) pour le bus de source A ou Ax et pour le bus de source B ou Bx (A, Ax, B, Bx), auquel cas comme source de données de l'un des ports d'établissement de liaison (hw, ho, hs, hn), on utilise l'une des cellules de registre (ro, ..., r15), l'unité ALU (al), la constante (k) ou l'un des registres de bus (ba, bb),
- une première adresse (ra) de récepteur, qui indique à cet effet l'une des cellules de registres (ro, ..., r15),
- d'autres adresses (Oa, Na, Wa, Sa) de récepteurs, qui indiquent le transfert de données vers des cellules voisines, une adresse de source C (Ca), qui indique quel circuit du noyau de cellule doit être connecté au bus de résultat C (C), et
- une adresse d'entrée de registre (Ra), qui indique si la cellule de registre (ro, ..., r15), dans laquelle l'enregistrement doit être exécuté, doit être enregistrée par l'intermédiaire de l'entrée Q ou de l'entrée R.

9. Processeur en réseau selon la revendication 8, caractérisé en ce que l'ensemble d'instructions (i) contient, à la place du code de condition (sc) et de l'adresse de branchement (vra), une constante (k).

10. Processeur en réseau selon la revendication 1, caractérisé par le fait que dans la microplaquette, la cadence (c) est appliquée de façon topologique sous la forme d'un arbre H (h), aux différentes cellules (zp).
